# EUROPEAN PATENT SPECIFICATION

(11) **EP 4 109 618 B1**
(45) Date of publication and mention of the grant of the patent: **06.08.2025**
(21) Application number: 22180969.2
(22) Date of filing: 24.06.2022
(51) Int. Cl.: H01M 10/0525, H01M 50/103, H01M 50/15, H01M 50/164, H01M 50/188, H01M 50/193, H01M 50/477, H01M 50/486, H01M 50/528, H01M 50/536, H01M 50/538, H01M 50/557

(54) **LITHIUM ION BATTERY AND ELECTRIC CAR WITH THE SAME**
LITHIUM-IONEN-BATTERIE UND ELEKTROAUTO DAMIT
BATTERIE AU LITHIUM-ION ET VÉHICULE ÉLECTRIQUE ÉQUIPÉ DE CELLE-CI

(30) Priority: 25.06.2021 CN 202110714367
(43) Date of publication of application: 28.12.2022
(73) Proprietor: Gree Altairnano New Energy Inc., Zhuhai, Guangdong 519040 (CN)
(72) Inventor: JIANG, Shiyong, Zhuhai (CN); ZHAN, Shiying, Zhuhai (CN); XU, Delei, Zhuhai (CN); LI, Haijun, Zhuhai (CN); CHENG, Ahong, Zhuhai (CN); DENG, Saijun, Zhuhai (CN)
(74) Representative: Berggren Oy

(56) References cited:
- CN-A- 112 259 835
- US-A1- 2013 078 505
- US-A1- 2013 260 215
- US-A1- 2013 288 088

## Description

### Technical Field

The invention relates to the technical field of battery design, in particular to a lithium ion battery and an electric car with the lithium ion battery.

### Background

With the development of new energy industry, the demand of the electric automobile industry and an energy storage system for lithium ion batteries continuously increases, and the lithium ion batteries play a leading role in the whole new energy industry. Lithium ion batteries on the market at present include polymer pouch batteries, cylindrical batteries and square batteries. The polymer pouch batteries are high in energy density, good in safety and flexible in appearance dimension design, but are not convenient to assemble into a group due to the influence of the structural appearance, and has certain limitation on module PACK, so that the types and models applied to the power battery market are few. Most cylindrical batteries mainly use steel shells or aluminum shells and are widely applied in the power market, but the energy density of the assembled PACK is low, so that the requirement for endurance mileage in the market cannot be met. Most square batteries on the market at present mainly use aluminum shells, and are diversified in product models, strong in assembly grouping property, high in energy density and long in endurance mileage, thus being widely applied to the new energy power industry.

The square battery on the market at present is generally composed of a cover plate assembly, a shell, a battery cell, other auxiliary connecting pieces and auxiliary supporting pieces. The auxiliary connecting pieces are a link for connecting the battery cell and the cover plate assembly, and a closed conductive path is formed in the battery. The auxiliary supporting pieces play a role in fixing and supporting the battery cell, so that the battery cell is insulated from the shell and is prevented from colliding with the shell. In the prior art, the auxiliary connecting pieces in the battery are mostly of flexible connection structures and are configured to connect a battery cell tab and polarity terminal components (positive and negative poles) of the cover plate assembly. Flexible connection is good in heat dissipation capacity, but is weak in current bearing capacity, which is not conducive to improving the rate performance of the battery. Meanwhile, flexible connection is low in welding reliability, therefore, ultrasonic welding and laser welding need to be combined in the welding process in order to enhance the welding strength, but the operation procedure is complex, the working time is long, the production efficiency is low, and consequently, mass production of the battery is affected. At present, the auxiliary supporting pieces in the battery have the problems of poor fixing and limiting performance, low cooperation degree, tedious operation procedure and the like, which is not beneficial to fixing the battery cell and not suitable for mass production of the battery.

In document D1 (US2013078505A1), according to figure 1, 2, 8 and paragraph [0042,51,57-58] of the description, it is recorded that: a rechargeable battery 100 includes at least one electrode assembly 10 (which may be spiral -wound by locating a separator 13 between a positive electro de 11 and a negative electrode 12), a case 20 receiving the electrode assembly 10, and a cap assembly 30 coupled to an opening of the case 20. The positive and negative terminals 21 and 22 may be electrically connected to positive and negative current collectors 40 and 50 that are coupled, e.g., weld-coupled, to the positive uncoated region 11a or the negative uncoated region 12a. The positive terminal 21 according to the present example embodiment may include a body 21b, a flange 21a. and a coupling protrusion 21c protruded from the flange 21a, and the positive current collector 40 may include a terminal coupling unit 41 formed with a terminal coupling groove 41a and an electrode current collector coupling unit 42. The first separating member 84 according to the present example embodiment may include a first body portion 84a and a first protrusion portion 84b that is formed with a positive terminal fixing groove 841b. The first body portion84a of the first separating member 84 may include an electrode assembly receiving groove 841a, and a pair of first fixing walls 84c extending from facing edges of the electrode assembly receiving groove 841a. The first fixing walls 84c may be made of the insulating material, for, example an insulating resin. In other implementations, the first fixing walls 84c according to the present example embodiment may be extended from the second separating member 90, or may be extended from the first and second separating members 84 and 90.

In document D2 (US2013260215A1), according to figure 4, it is recorded that: a first groove is formed in the edge of the first folded edge, and the groove wall of the first groove is connected with the battery cell tab assembly.

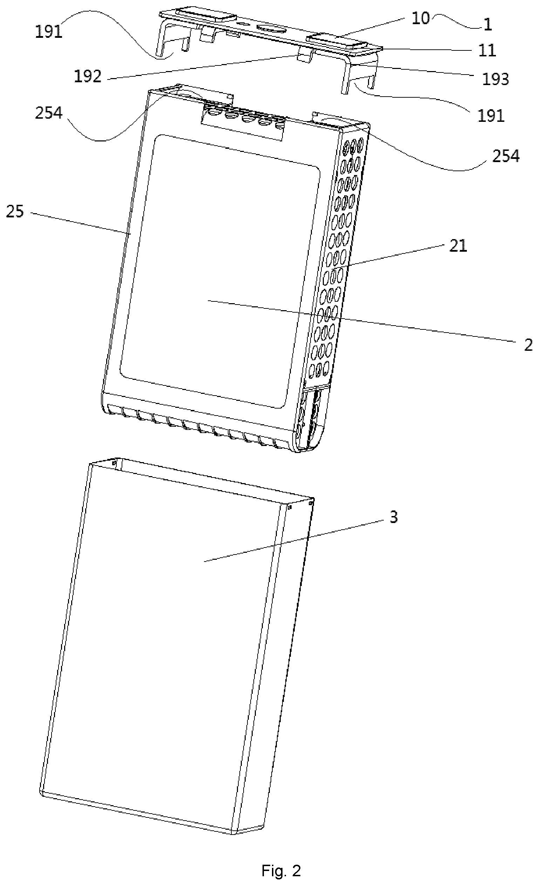

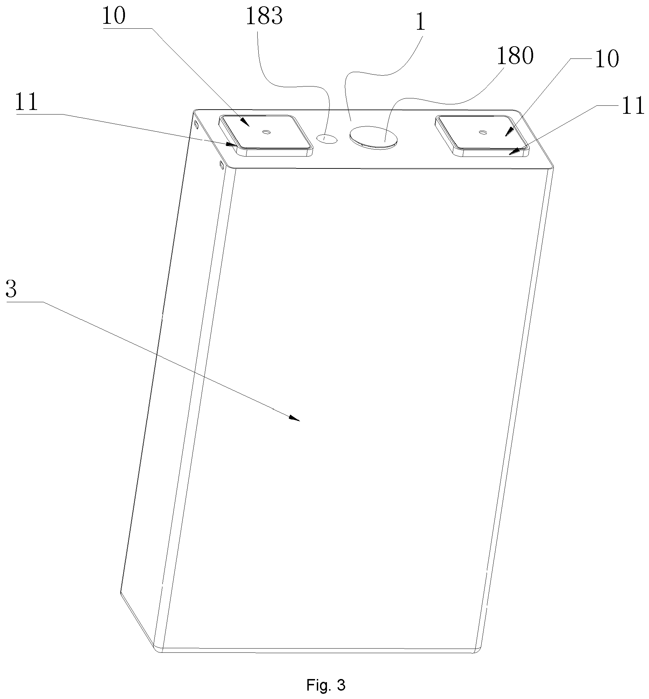

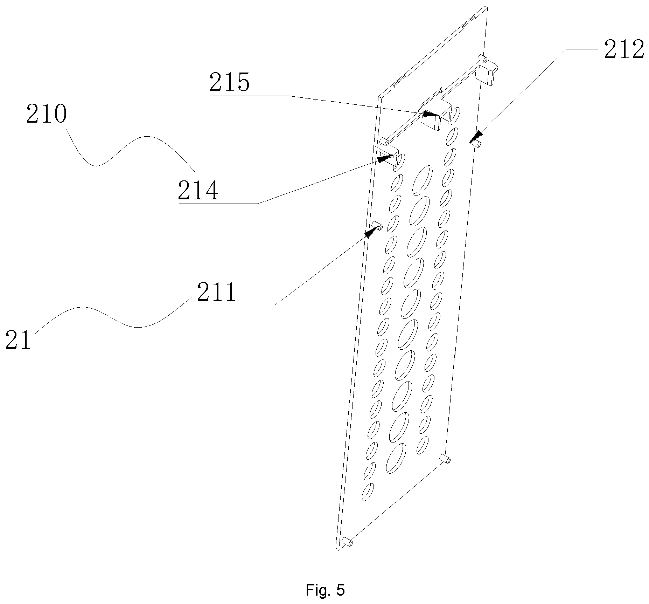

In document D3 (US2013188088A1), according to figure 2,5 and paragraph [0039,45] of the description, it is recorded that: The first collector plate 20 is formed of a conductive material, such as aluminum, and contacts the first electrode uncoated portion 11a protruding to one end of the electrode assembly 10 to be electrically connected to the first electrode plate11.Referring to FIGS. 2 and 3 A in one embodiment. the first collector plate 20 includes a first connection part 21 a first extension part 23, a first terminal hole 24. a first fuse hole25, and a first fuse protrusion 26. In one embodiment. the first fuse protrusion 26 is bent from an end of the first fuse section Sf and extends toward the electrode assembly 10. At least one of the first fuse protrusion 26 may be formed on either or both ofthe left or right side of the first fuse hole 25. The first fuse protrusion 26 is bent in the vicinity of the first fuse hole 25 and strengthens the section where the first fuse hole 25 is formed. Therefore in a case where an electrical short-circuit does not occur to the rechargeable battery 100 due to low resistance of the section where the first fuse hole 25 is formed against external shocks. the first fuse protrusion 26 may prevent or substantially pre vent the section where the first fuse hole 25 is formed from being warped or damaged due to the external shocks.In addition, the first fuse protrusion 26 forms a current path CP(see FIG.5) together with the first connection part 21 and the first extension part 23. The first fuse protrusion 26 allows a current flowing between the first connection part 21 and the first extension part 23 to detour to the first fuse protrusion 26. thereby increasing a duration of time in which the current flows through a narrow area.

In document D4 (CN112259835A), according to paragraph [0100] of the description, it is recorded that: Compared with the prior art, in the laminated battery pole core assembly, the electrolyte enters the pole core 1 from the immersion hole 51 and the weight reduction hole 81reducing the support plate 8 and the adhesive tape 5hindering the entry of the electrolyte into the pole care 1.Inside the shell structure 4.The weight-reducing hole 81 also reduces the weight of the support plate 8 at the same time, There is no need to fix the adhesive tape 5 on the pole core 1 and then make openings which improves the production efficiency of the laminated battery.

### Summary

The invention is set out in the appended set of the claims.

The invention mainly aims to provide a lithium ion battery and an electric car with the lithium ion battery, so as to solve the problem that the current bearing capacity of a battery in the prior art is weak.

In order to achieve the above object, according to an aspect of the invention, there is provided a lithium ion battery. The lithium ion battery includes a cover plate assembly and a battery cell assembly, the cover plate assembly includes a pole and a polarity connecting piece, the pole is connected with the polarity connecting piece, the battery cell assembly is provided with at least one battery cell tab assembly, and the pole is connected and conducted with the at least one battery cell tab assembly through the polarity connecting piece.

Furthermore, the lithium ion battery further includes a shell and a supporting part, the battery cell assembly and the polarity connecting piece are disposed in the shell, the supporting part is disposed in the shell and configured to support the battery cell assembly, and the cover plate assembly is disposed at the opening of the shell and connected with the supporting part.

Furthermore, the polarity connecting piece includes a polarity plate body, a first through hole is formed in the polarity plate body, a first protrusion and a first folded edge are disposed on the side, facing the battery cell assembly, of the polarity plate body, a first groove is formed in the edge of the first folded edge, the first protrusion is connected with the supporting part, part of the pole penetrates through the cover plate assembly and extends into the shell to be in interference fit with the polarity plate body through the first through hole, and the groove wall of the first groove is connected with the battery cell tab assembly.

Furthermore, the battery cell assembly includes a battery cell, and the battery cell tab assembly is disposed on the surface of the battery cell. The battery cell tab assembly includes two polarity lugs, a connecting plate and a base plate, two polarity lugs are available and oppositely disposed to form a limiting space, part of the connecting plate is located in the limiting space, an end of the connecting plate extends into the first groove and is connected with the side wall of the first groove, and the base plate is connected with outer surfaces of the two polarity lugs.

Furthermore, the number of the poles is two, the number of the polarity connecting pieces is two, the two battery cell tab assemblies and the two polarity connecting pieces are disposed in a one-to-one correspondence mode, the two polarity connecting pieces and the two poles are disposed in a one-to-one correspondence mode, one of the two battery cell tab assemblies is positive, and the other one is negative.

Furthermore, the cover plate assembly includes a cover plate and an insulating support, at least one second through hole is formed in the cover plate, the poles are located on one side of the outer surface of the cover plate, part of the pole penetrates through the second through hole to be connected with the polarity connecting piece, the insulating support is connected with the cover plate and provided with third through holes corresponding to the second through holes one by one, and an end part of the insulating support is clamped with the supporting part.

Furthermore, the cover plate and the insulating support are provided with fourth through holes, each fourth through hole is provided with an explosion-proof valve and a protective sticker, and the protective sticker is disposed on a side where an outer surface of the explosion-proof valve is located.

Furthermore, the cover plate and the insulating support are provided with fifth through holes, each fifth through hole is provided with a sealing plug and a sealing sticker, and the sealing sticker is disposed on a side where an outer surface of the sealing plug is located.

Furthermore, the cover plate assembly further includes a protective sleeve, the protective sleeve is disposed on the pole in a sleeving mode and located on a side where an outer surface of the cover plate is located, and a sealing ring is disposed between the protective sleeve and the cover plate.

Furthermore, the supporting part includes two fixing frames and two protection plates, the two fixing frames are oppositely disposed and connected in a first direction, the two protection plates are oppositely disposed in a second direction and located on two sides of the fixing frames respectively, the two fixing frames and the two protection plates define an installation space, the battery cell assembly is located in the installation space and provided with two battery cell tab assemblies, and the two battery cell tab assemblies are disposed facing a side where the protection plates are located.

Furthermore, one of the two fixing frames is provided with a locking column, the other fixing frame of the two fixing frames of the two fixing frames is provided with a connecting hole matched with the locking column, or, a first end of each fixing frame is provided with a locking column, and a second end of each fixing frame is provided with a connecting hole.

Furthermore, each fixing frame includes a plate body structure, a first U-shaped plate is disposed on a side, facing the protection plate, of a first end of the plate body structure, a second U-shaped plate is disposed on a side, facing the protection plate, of a second end of the plate body structure, an opening side of the first U-shaped plate and an opening side of the second U-shaped plate are oppositely disposed, and at least one second protrusion is disposed on the outer surface of at least one of the first U-shaped plate and the second U-shaped plate and abuts against a connecting plate of the battery cell tab assembly.

Furthermore, at least one first limiting groove is formed in an end part of the first end of the plate body structure, and a first protrusion of the polarity connecting piece extends into the first limiting groove.

Furthermore, at least one of the first U-shaped plate and the second U-shaped plate is of a hollow structure.

Furthermore, second limiting grooves are formed in outer surfaces of two oppositely arranged side plates of the second U-shaped plate, and part of the protection plates extend into the second limiting grooves.

Furthermore, each protection plate includes a protection plate body, an inner surface of a first end of the protection plate body is of an arc-shaped chamfer structure, a second folded edge is disposed at a second end of the protection plate body, a length direction of the second folded edge is disposed in a width direction of the protection plate body, a third protrusion is disposed on a surface of a side, facing the fixing frame, of the second folded edge, and the third protrusion and a corresponding second limiting groove in the second limiting grooves are disposed in a matched mode.

Furthermore, the protection plate is of a hollow structure, a first limiting column and a second limiting column are disposed on a surface of a side, facing the fixing frame, of the protection plate, the first limiting column and the second limiting column are oppositely disposed, and the first limiting column and the second limiting column abut against the fixing frame.

Furthermore, at least one of the sealing ring and the insulating support is made of PFA material.

According to an aspect of the invention, there is provided an electric car, which includes the lithium ion battery, and the lithium ion battery is the abovementioned lithium ion battery.

According to the technical solution, the poles and the polarity connecting pieces are disposed, and the poles are connected and conducted with the battery cell tab assemblies through the polarity connecting pieces. By means of the arrangement, hard connection between the poles and the battery cell tab assemblies is realized, the current bearing capacity of the lithium ion battery can be effectively improved, meanwhile, the heat dissipation capacity of the battery structure is optimized, and the connection reliability of the lithium ion battery is improved.

### Brief Description of the Drawings

The drawings, which form a part hereof, serve to provide a further understanding of the invention, and illustrative embodiments of the invention and descriptions thereof serve to explain the invention and are not to be construed as unduly limiting the invention. In the drawings:
Fig. 1 illustrates an explosive structural schematic diagram of a lithium ion battery according to a first embodiment of the invention.
Fig. 2 illustrates an explosive structural schematic diagram of a lithium ion battery according to a second embodiment of the invention.
Fig. 3 illustrates a structural schematic diagram of a lithium ion battery according to an embodiment of the invention.
Fig. 4 illustrates a structural schematic diagram of a cover plate assembly according to an embodiment of the invention.
Fig. 5 illustrates a structural schematic diagram of a protection plate according to a first embodiment of the invention.
Fig. 6 illustrates a structural schematic diagram of a protection plate according to a second embodiment of the invention.
Fig. 7 illustrates an explosive structural schematic diagram of a cover plate assembly according to a first embodiment of the invention.
Fig. 8 illustrates an explosive structural schematic diagram of a cover plate assembly according to a second embodiment of the invention.
Fig. 9 illustrates a structural schematic diagram of a fixing frame according to a first embodiment of the invention.
Fig. 10 illustrates a structural schematic diagram of a fixing frame according to a second embodiment of the invention.
Fig. 11 illustrates an explosive structural schematic diagram of a battery cell assembly according to an embodiment of the invention.
Fig. 12 illustrates an explosive structural schematic diagram of a lithium ion battery according to a third embodiment of the invention.

Therein, the above-mentioned drawings include the following reference numerals:
1. Cover plate assembly; 2. Battery cell assembly; 3. Shell; 10. Pole; 11. Protective sleeve; 12. Sealing ring;
13. Protective sticker; 14. Explosion-proof valve; 15. Sealing sticker; 16. Sealing plug; 17. Cover plate; 18. Insulating support; 19. Polarity connecting piece;
21. Protection plate; 22. Base plate; 23. Connecting plate; 24. Battery cell; 25, Fixing frame;
170. Second through hole; 182. Third through hole; 180. Fourth through hole; 183. Fifth through hole; 190. First through hole; 191. First groove; 192. First protrusion; 193. First folded edge;
200. Battery cell tab assembly; 201. Polarity lug;
210. Protection plate body; 211. First limiting column; 212. Second limiting column; 214. Second folded edge; 215, third protrusion;
251. Locking column; 252. Connecting hole; 254. First limiting groove; 256. Plate body structure; 257. First U-shaped plate; 258. Second U-shaped plate; 259. Second protrusion; 2581. Second limiting groove.

### Detailed Description of the Embodiments

The invention will now be described in detail with reference to the accompanying drawings and the embodiments.

It is to be noted that terms used herein are for the purpose of describing specific implementation modes only and are not intended to be limiting of exemplary implementation modes according to the invention. As used herein, the singular forms are intended to include the plural forms as well, unless the context clearly indicates otherwise, and in addition, it should be understood that the terms "includes" and/or "comprises," when used in this specification, specify the presence of features, steps, operations, devices, components, and/or combinations thereof.

It is to be noted that the terms "first," "second," and the like in the specification, the claims and the drawings of the invention are used for distinguishing between similar objects and not necessarily for describing a particular sequence or sequential order. It is to be understood that terms so used may be interchanged where appropriate so that the implementation modes of the invention described herein can be implemented in other sequences than those illustrated or described herein. In addition, the terms "comprise" and "have" and any variations thereof, are intended to cover a non-exclusive inclusion, e.g., a process, method, system, product, or device that comprises a series of steps or units is not necessarily limited to those steps or units expressly listed, rather, other steps or units not expressly listed or inherent to such process, method, product, or device may be included.

Spatially relative terms, such as "over", "above", "on the upper surface", "upper" and the like, may be used herein for ease of description to describe spatial positional relationship between one device or feature and another device or feature as illustrated in the figures. It should be understood, the spatially relative terms are intended to encompass different orientations in use or operation in addition to the orientation of the device depicted in the figures. For example, if a device in the figures is inverted, devices described as "above" or "over" other devices or formations would then be positioned "below" or "under" the other devices or formations. Thus, the explanatory term "above" can encompass both orientations of "above" and "under." The device may also be positioned in other different ways (rotated 90 degrees or at other orientations) and the spatially relative descriptions used herein are interpreted accordingly.

The exemplary implementation modes of the invention will now be described more fully with reference to the accompanying drawings. However, these explanatory implementation modes may, however, be implemented in many different forms and should not be construed as limited to only the implementation modes set forth herein. It is to be understood that these implementation modes are provided so that this disclosure will be thorough and complete, and will fully convey the concept of these exemplary implementation modes to those of ordinary skill in the art, in the drawings, the thicknesses of layers and regions may be exaggerated for the sake of clarity, like reference numerals are used to denote like devices, and thus descriptions thereof will be omitted.

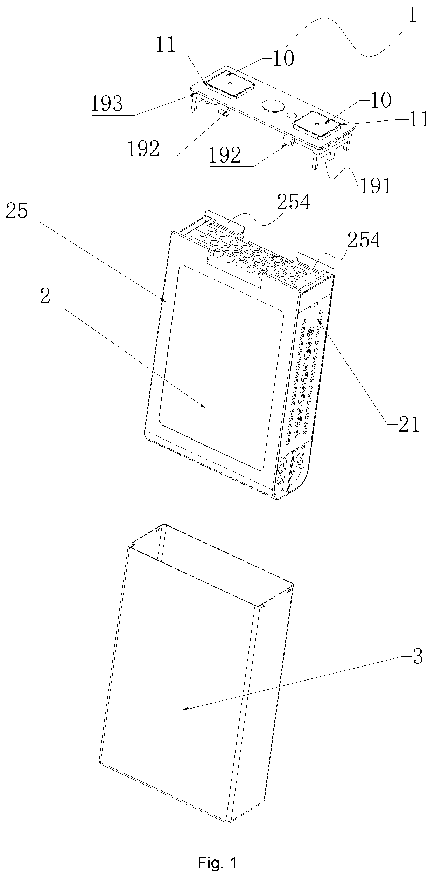

With reference to Figs. 1-12, a lithium ion battery is provided in accordance with a specific embodiment of the invention.

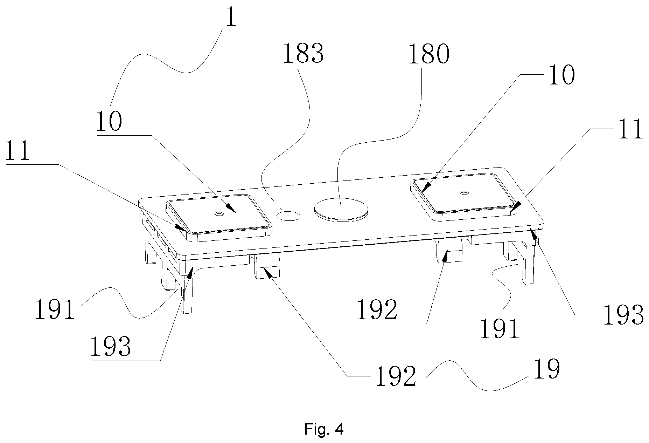

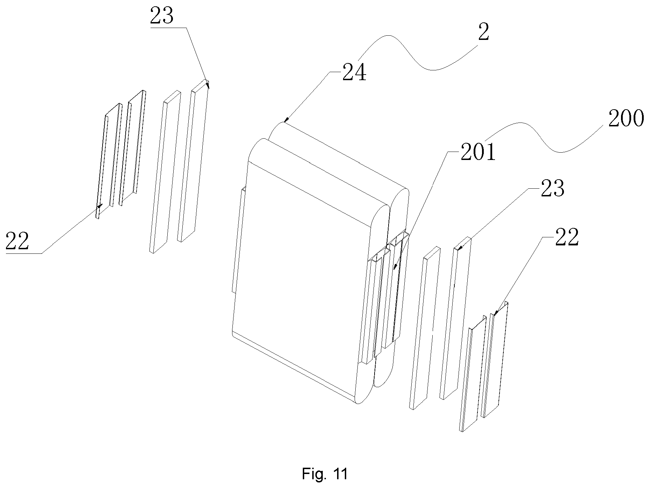

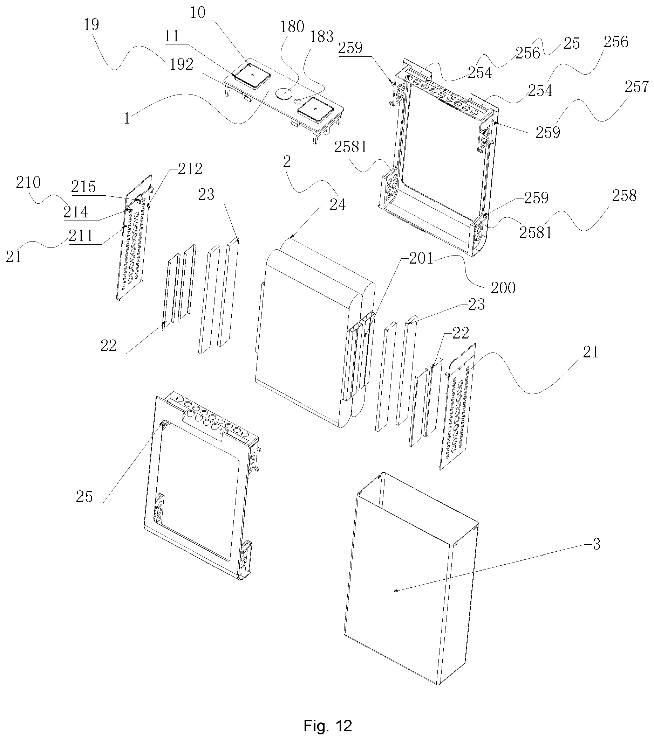

As shown in Fig. 12, the lithium ion battery includes a cover plate assembly 1 and a battery cell assembly 2. As shown in Fig. 4, the cover plate assembly 1 includes a pole 10 and a polarity connecting piece 19, and the pole 10 is connected with the polarity connecting piece 19. As shown in Fig. 11, the battery cell assembly 2 is provided with at least one battery cell tab assembly 200, and the pole 10 is connected and conducted with the at least one battery cell tab assembly 200 through the polarity connecting piece 19. The polarity connecting piece 19 is in interference fit with the pole 10 for laser welding, so that the connection reliability is high, the overcurrent capability is strong, and electronic conduction is easy. Generally, the polarity connecting piece 19 is made of a conductive metal material, in some embodiments, the polarity connecting piece 19 is made of aluminum or copper. The pole 10 and the polarity connecting piece 19 are disposed, and the pole 10 is connected and conducted with the battery cell tab assembly 200 through the polarity connecting piece 19. By means of the arrangement, hard connection between the pole 10 and the battery cell tab assembly 200 is realized, the current bearing capacity of the lithium ion battery can be effectively improved, meanwhile, the heat dissipation capacity of the battery structure is optimized, and the connection reliability of the lithium ion battery is improved.

With reference to Figs. 2 and 3, the lithium ion battery further includes a shell 3 and a supporting part, the battery cell assembly 2 and the polarity connecting piece 19 are disposed in the shell 3, the supporting part is disposed in the shell 3 and configured to support the battery cell assembly 2, and the cover plate assembly 1 is disposed at the opening of the shell 3 and connected with the supporting part. The supporting part is configured for fixing and supporting the battery cell assembly 2, limiting the battery cell assembly and meanwhile preventing a battery cell from being collided. The shell 3 is configured to protect the battery cell assembly 2 for preventing the battery cell assembly 2 from being extruded by the outside, and preventing the battery cell assembly 2 from being corroded by water, oil and the like to cause potential safety hazards.

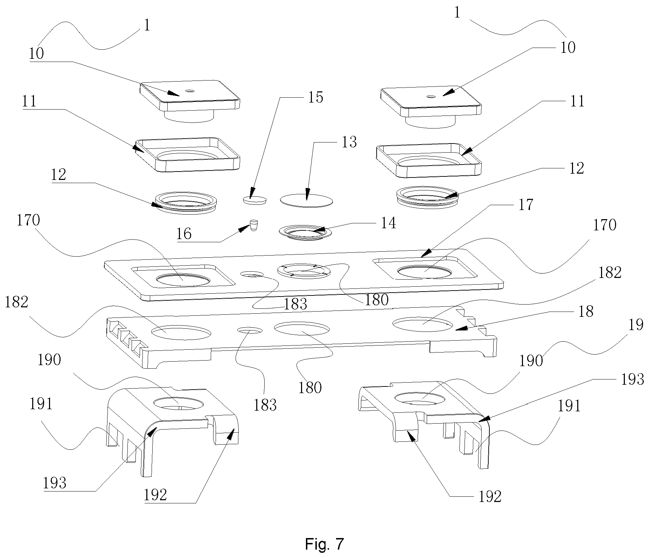

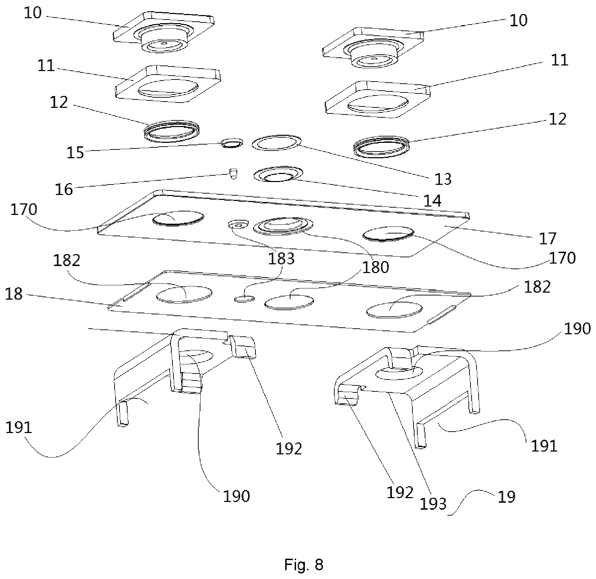

Specifically, with reference to Figs. 7 and 8, the polarity connecting piece 19 includes a polarity plate body, a first through hole 190 is formed in the polarity plate body, a first protrusion 192 and a first folded edge 193 are disposed on the side, facing the battery cell assembly 2, of the polarity plate body, a first groove 191 is formed in the edge of the first folded edge 193, the first protrusion 192 is connected with the supporting part, part of the pole 10 penetrates through the cover plate assembly 1 and extends into the shell 3 to be in interference fit with the polarity plate body through the first through hole 190, and the groove wall of the first groove 191 is connected with the battery cell tab assembly 200. The number of the first groove 191 may be two (as shown in Fig. 7) or one (as shown in Fig. 8), the groove wall of the first groove 191 is connected with the battery cell tab assembly 200, and normal charging and discharging operation of the battery can be guaranteed.

As shown in Fig. 11, the battery cell assembly 2 includes a battery cell 24, the battery cell tab assembly 200 is disposed on the surface of the battery cell 24, the battery cell tab assembly 200 includes two polarity lugs 201, a connecting plate 23 and a base plate 22, the two polarity lugs 201 are oppositely disposed to form a limiting space, part of the connecting plate 23 is located in the limiting space, an end of the connecting plate 23 extends into the first groove 191 and is connected with the side wall of the first groove 191, and the base plate 22 is connected with outer surfaces of the polarity lugs 201. In a specific embodiment of the battery cell shown in Fig. 11, the number of the battery cells 24 is two, and the two single battery cells 24 are disposed in parallel. The parallel arrangement of the battery cells can increase the capacity of the battery, reduce internal resistance, prolong power supply time and improve the performance of the battery. The two polarity lugs 201 form a limiting space together for fixing the connecting plate 23, so that the connecting plate 23 does not deviate in position. The base plate 22 covers the surfaces of the polarity lugs 201 to play a protection role, so that splashing of welding slag can be effectively prevented in the laser welding process, and the welding reliability can be improved. One end of the connecting plate 23 and the first groove 191 can be tightly connected through laser welding. The connecting plate is a metal aluminum plate or copper plate with the thickness of 1-10 mm and is connected with a tab of the battery cell; and the base plate is a thin plate with the thickness of 10-40 um, in some embodiments, the connecting plate 23 is made of aluminum foil or copper foil.

Furthermore, the number of the battery cell tab assemblies 200 is two, the number of the poles 10 is two, the number of the polarity connecting pieces 19 is two, the two battery cell tab assemblies 200 and the two polarity connecting pieces 19 are disposed in a one-to-one correspondence mode, the two polarity connecting pieces 19 and the two poles 10 are disposed in a one-to-one correspondence mode, one of the two battery cell tab assemblies 200 is positive, and the other one is negative. Each of the numbers of the poles 10, the polarity connecting pieces 19 and the battery cell tab assemblies 200 is two, and the two poles 10, the two polarity connecting pieces 19 and the two battery cell tab assemblies 200 are disposed in a one-to-one correspondence mode. One of the battery cell tab assemblies 200 is positive, and the other one is negative, so that normal charging and discharging operation of the battery is guaranteed.

In some embodiments, as shown in Figs. 7 and 8, the cover plate assembly 1 includes a cover plate 17 and an insulating support 18, at least one second through hole 170 is formed in the cover plate 17, the poles 10 are located on one side of the outer surface of the cover plate 17, part of the pole 10 penetrates through the second through hole 170 to be connected with the polarity connecting piece 19, the insulating support 18 is connected with the cover plate 17 and provided with third through holes 182 corresponding to the second through holes 170 one by one, and an end part of the insulating support 18 is clamped with the supporting part. The corresponding arrangement of the second through hole 170 and the third through hole 182 enables a part of the pole to smoothly pass through the second through hole 170 and the third through hole 182. The cover plate 17 is used as a structural supporting piece, and the insulating support 18 has the functions of insulation, support and sealing.

Furthermore, the cover plate 17 and the insulating support 18 are provided with fourth through holes 180, the fourth through hole 180 is provided with an explosion-proof valve 14 and a protective sticker 13, and the protective sticker 13 is disposed on a side where an outer surface of the explosion-proof valve 14 is located. The explosion-proof valve 14 and the protective sticker 13 are arranged, so that the phenomenon that the battery explodes under the conditions of overhigh temperature, internal gas expansion, pressure increase and the like can be prevented, and an air pressure safety protection effect is achieved.

The cover plate 17 and the insulating support 18 are provided with fifth through holes 183, each fifth through hole 183 is provided with a sealing plug 16 and a sealing sticker 15, and the sealing sticker 15 is disposed on a side where an outer surface of the sealing plug 16 is located. In some embodiments, in the embodiment of Figs. 7 and 8, the sealing plug 16 and the insulating support 18 are integrally formed through a nano injection molding process, so that the bonding strength is high, and the sealing performance is good. The sealing plug 16 and the sealing sticker 15 are configured for sealing a liquid injection hole, so that liquid leakage of the battery can be prevented.

The cover plate assembly 1 further includes a protective sleeve 11, the protective sleeve 11 is disposed on the pole 10 in a sleeving mode and located on a side where an outer surface of the cover plate 17 is located, and a sealing ring 12 is disposed between the protective sleeve 11 and the cover plate 17. The protective sleeve 11 is disposed on the pole 10 in a sleeving mode, so that the pole can be prevented being impacted and rubbed by the outside, and the sealing ring 12 is disposed between the protective sleeve 11 and the cover plate 17 to play the roles of isolation, limiting, insulation and supporting.

With reference to Figs. 1, 2 and 12, the supporting part includes two fixing frames 25 and two protection plates 21, the two fixing frames 25 are oppositely disposed and connected in a first direction, the two protection plates 21 are oppositely disposed in a second direction and located on two sides of the fixing frames 25 respectively, the two fixing frames 25 and the two protection plates 21 define an installation space, the battery cell assembly 2 is located in the installation space and provided with two battery cell tab assemblies 200, and the two battery cell tab assemblies 200 are disposed facing the side where the protection plates 21 are located. The installation space formed by the fixing frames 25 and the protection plates 21 envelopes the whole battery cell assembly 2, so that the movement of the battery cell assembly 2 is limited. In the embodiment, the supporting part is made of PPS insulating material, which is good in dielectric property, resistant to high temperature, resistant to electrolyte corrosion and good in flame retardance, and has certain strength. As shown in Fig. 2, the lithium battery is a square lithium ion battery, the first direction can be the thickness direction of the square lithium ion battery, and the second direction can be the width direction of the square lithium ion battery.

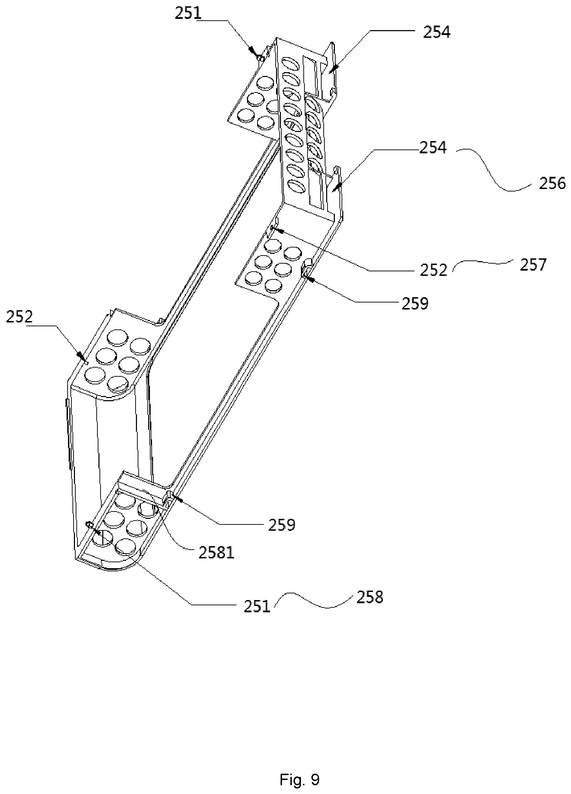

One of the two fixing frames 25 is provided with a locking column 251, the other fixing frame 25 of the two fixing frames 25 is provided with a connecting hole 252 matched with the locking column 251, a first end of each fixing frame 25 is provided with a locking column 251, and a second end of each fixing frame 25 is provided with a connecting hole 252. In some embodiments, as shown in Fig. 9, two pairs of locking columns 251 and connecting holes 252 are formed in upper part and lower part of the fixing frame 25, and the locking columns 251 and connecting holes 252 form a locking structure together, so that battery cell can be fixed and locked during assembly.

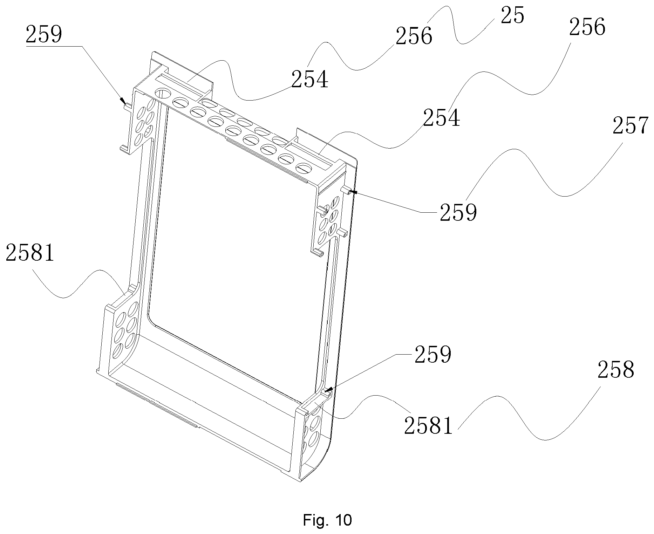

Specifically, as shown by Figs. 9 and 10, each fixing frame 25 includes a plate body structure 256, a first U-shaped plate 257 is disposed on a side, facing the protection plate 21, of the first end of the plate body structure 256, a second U-shaped plate 258 is disposed on the side, facing the protection plate 21, of a second end of the plate body structure 256, an opening side of the first U-shaped plate 257 and an opening side of the second U-shaped plate 258 are oppositely arranged, and at least one second protrusion 259 is disposed on the outer surface of at least one of the first U-shaped plate 257 and the second U-shaped plate 258 and abuts against a connecting plate 23 of the battery cell tab assembly 200. The second protrusion 259 is used as a limiting structure for limiting and fixing the connecting plate 23.

At least one first limiting groove 254 is formed in an end portion of the first end of the plate body structure 256, and a first protrusion 192 of the polarity connecting piece 19 extends into the first limiting groove 254. In the embodiment shown in Fig. 9, the first limiting groove 254 is of an arc-shaped structure. When the battery is assembled, the first protrusion 192 extends into the first limiting groove 254 and is in contact with the bottom of the first limiting groove 254 for limiting and fixing the polarity connecting piece 19.

In some embodiments, at least one of the first U-shaped plate 257 and the second U-shaped plate 258 is of a hollow structure. Due to the hollow structure, the weight of the battery can be reduced, and the energy density of the battery can be improved.

Furthermore, second limiting grooves 2581 are formed in the outer surfaces of two oppositely disposed side plates of the second U-shaped plate 258, and part of the protection plates 21 extend into the second limiting grooves 2581. Through the arrangement of the second limiting grooves 2581, the protection plate can be matched with the fixing frame to limit and fix the battery cell assembly.

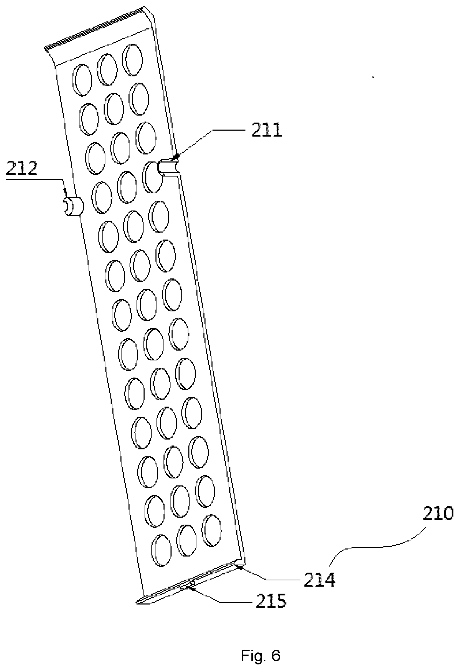

As shown in Figs. 5 and 6, each protection plate 21 includes a protection plate body 210, the inner surface of the first end of the protection plate body 210 is of an arc-shaped chamfer structure (as shown in Fig. 6), a second folded edge 214 is disposed at a second end of the protection plate body 210, a length direction of the second folded edge 214 is disposed in a width direction of the protection plate body 210, a third protrusion 215 is disposed on a surface of a side, facing the fixing frame 25, of the second folded edge 214, and the third protrusion 215 and a corresponding second limiting groove 2581 in the second limiting grooves are disposed in a matched mode. In the embodiment of the protection plate shown in Fig. 6, the inner surface of the first end of the protection plate body 210 is provided with an arc-shaped chamfer structure, which can be matched with a protruding structure located on the edge of the insulating support 18 in the cover plate assembly 1 shown in Fig. 8 for clamping and fixing, so that the cover plate assembly 1 is limited left and right, and the protection plate 21 is limited to move up and down. The second folded edge 214 is in fixed contact with the surface of the fixing frame 25, so that the third protrusion 215 disposed on the second folded edge is fixed in the second limiting groove 2581 of the fixing frame 25, the battery cell assembly is limited, and the protection plate 21 and the fixing frame 25 are matched, clamped and fixed.

In some embodiments, the protection plate 21 is of a hollow structure, a first limiting column 211 and a second limiting column 212 are disposed on a surface of a side, facing the fixing frame 25, of the protection plate 21, the first limiting column 211 and the second limiting column 212 are oppositely disposed, and the first limiting column 211 and the second limiting column 212 abut against the fixing frame 25. As shown in Figs. 5 and 6, the first limiting column 211 and the second limiting column 212 are located at the left end and the right end of the protection plate 21 respectively and fixedly limited with the inner surface of the fixing frame 25.

The sealing ring 12 and the insulating support 18 are made of insulating materials and have an insulating effect. In the embodiment, at least one of the sealing ring 12 and the insulating support 18 is made of a PFA material, and an insulating material such as PP, PPS, PFA and PET can be selected according to actual conditions in practical application.

The lithium ion battery in the embodiment can also be applied to the technical field of vehicle equipment, namely, according to another embodiment of the invention, there is provided an electric car, which includes the lithium ion battery, and the lithium ion battery is the abovementioned lithium ion battery.

In the above embodiment, the lithium ion battery includes a cover plate assembly, a battery cell assembly, a supporting part and a shell. For the cover plate assembly, a hard connection structure is introduced for connecting the battery cell tab assembly; the supporting part includes a fixing frame and a protection plate, through match and fixing with the cover plate assembly, the battery cell assembly is limited, fixed and supported to prevent collision, and meanwhile, infiltration and permeation of electrolyte are facilitated; the battery cell assembly is composed of a battery cell, a connecting plate and a base plate, the internal space of the battery is increased, the effective space utilization rate is improved, and the heat dissipation capacity of the battery is effectively improved. By improving the structures of the cover plate assembly, the battery cell assembly and the supporting part, the heat dissipation capacity and the overcurrent capacity of structural parts of the battery are enhanced, the welding reliability is improved, the rate performance of the battery is improved, the production efficiency of the battery is improved, and the battery is suitable for mass production.

In an embodiment of the invention, the lithium ion battery is a lithium titanate square battery and includes a cover plate assembly 1, a shell 3, a battery cell assembly 2 and a supporting part. The cover plate assembly 1 and the shell 3 are welded through laser to form a closed containing cavity, and the battery cell assembly 2 is located in the containing cavity. The battery cell assembly 2 includes two single battery cells 24 and a battery cell tab assembly 200, and the two single battery cells 24 are connected in parallel. The battery cell tab assembly includes a connecting plate 23, a base plate 22 and a polarity lug 201, the connecting plate 23 is connected with a polarity connecting piece 19 in the cover plate assembly 1 in a laser welding mode, and the supporting part is configured to fix and support a battery cell 24 and limit the battery cell 24 and meanwhile can prevent the battery cell 24 from being collided.

In the embodiment, the cover plate assembly 1 is composed of a polarity terminal component, a sealing ring 12, an insulating support 18, an explosion-proof valve 14, a protective sticker 13, a sealing plug 16 and a sealing sticker 15. The polarity terminal component includes positive and negative poles 10, pole protective sleeves 11 and positive and negative polarity connecting pieces 19, and the polarity connecting pieces 19 are hard connecting pieces and are directly or indirectly connected with the polarity lugs 201. The polarity connecting pieces 19 are in interference fit with the positive and negative poles 10 for laser welding, so that the connection reliability is high, the overcurrent capability is strong, and electronic conduction is easy, and conductive metal aluminum is adopted as the material. Two sides of the insulating support 18 are provided with edge protrusion structures, the polarity connecting piece 19 is provided with a first groove 191 and a first protrusion 192, and the edge protrusion structures, the first groove 191 and the first protrusion 192 have fixing and positioning functions. When the cover plate assembly 1 is assembled, the sealing plug 12 and the insulating support 18 are integrally formed through a nano injection molding process, so that the bonding strength is high, the sealing performance is good, and the sealing ring 12 and the insulating support 18 are made of PFA material.

The battery cell tab assembly 200 includes a polarity lug 201, a connecting plate 23 and a base plate 22, and the connecting plate 23 and the base plate 22 together form a hard connection. The connecting plate 23 is a metal aluminum plate with the thickness of 0.35 mm and is connected with the polarity lug 201; and the base plate 22 is an aluminum foil with the thickness of 20 um, so that splashing of welding slag during laser welding can be prevented, and the reliability of laser welding can be improved. When the battery cell assembly is installed, the polarity lugs 201 of same polarity of the battery cell are equally divided into two parts by equipment or manpower and bent by 90 degrees, so that the polarity lugs are in contact with surface of connecting plate 23, then the internal space of the battery is increased, the utilization rate of effective space is increased, invalid space is avoided, meanwhile, the heat dissipation capacity of battery can be improved, and performance of the battery is improved. When the base plate 22 covers the upper surface of the polarity lug 201, the connecting plate 23, the polarity lug 201 and the base plate 22 are compacted and fastened through tool equipment. Laser welding is carried out, so that the connecting plate 23, the polarity lug 201 and the base plate 22 are tightly connected. The connecting plate 23 is tightly connected with the first groove 191 of the polarity connecting piece 19 in the cover plate assembly 1 through laser welding.

The supporting part is composed of a group of fixing frames 25 and a pair of left and right protection plates 21. The fixing frames 25 and the protection plates 21 envelope the battery cell assembly 2. The fixing frame 25 is provided with a locking structure and a limiting structure. Each locking structure is composed of a locking column 251 and corresponding connecting hole 252, the upper and lower pairs of locking structures are configured for fixing and locking, when the battery is assembled, the battery cell assembly 2 is located in the middle, the battery cell assembly 2 is fixedly locked and completely wrapped by a group of fixing frames 25, and the upper and lower pairs of locking columns 251 and the connecting holes 252 are configured for locking and fixing. The limiting structure is a second protrusion 259 and is configured for limiting the connecting plate 23. The lower end face of the fixing frame 25 is provided with a plurality of stripe-shaped reinforcing rib structures for enhancing the strength. The upper end face of the fixing frame 25 is provided with a first limiting groove 254 arranged as an arc-shaped groove. When battery is assembled, the second protrusion 259 of the polarity connecting piece 19 in the cover plate assembly 1 is in contact with the bottom of first limiting groove 254 of the fixing frame 25 for limiting and fixing the polarity connecting piece 19, and the upper end face is matched with the cover plate assembly 1 for playing a role in fixing and supporting insulating support 18 in the cover plate assembly 1.

The left side and the right side of the protection plate 21 are provided with a first limiting column 211 and a second limiting column 212, the upper end is of an arc-shaped chamfer shape, the lower end face is provided with a second folded edge 214 and a third protrusion 215, and the surface of its main body is of a hollow structure, so that the weight can be reduced, and the energy density of the battery can be improved. The first limiting column 211 and the second limiting column 212 on the left side and the right side of the protection plate 21 are fixedly limited with the inner surface of the fixing frame 25, the arc-shaped chamfer shape of the upper end part of the protection plate 21 can be clamped and fixed with the edge protrusion structure of the insulating support 18 in the cover plate assembly 1, and the second folded edge 214 on the lower end face of the protection plate 21 is fixedly contacted with the surface of the fixing frame 25, so that the third protrusion 215 on the lower end surface of the protection plate 21 is fixed in the second limiting groove 2581 of the fixing frame 25. The supporting part is made of PPS insulating material, which is good in dielectric property, resistant to high temperature, resistant to electrolyte corrosion and good in flame retardance, and has certain strength.

Furthermore, the polarity connecting piece 19 of the cover plate assembly is limited and clamped with a first limiting groove 254 in the upper end portion of the fixing frame 25 in the battery cell assembly 2, and the edge protrusion structure of the insulating support 18 in the cover plate assembly 1 is in contact, fixing and clamping with an arc-shaped chamfer structure in the upper end part of the protection plate 21 in the battery cell assembly 2, and the protection plate 21 is limited to move up and down.

In the embodiment, according to the technical solution, the structure design of polarity hard connection is introduced, the structure of the cover plate assembly is optimized, the structure of the battery supporting part is improved, so that the bad phenomena of low welding reliability, low production efficiency, poor battery rate performance and the like in the prior art are avoided, the heat dissipation capacity and the overcurrent capacity of structural parts are improved, the welding reliability is improved, and improvement of the rate capability is facilitated. Meanwhile, the square battery is high in production efficiency and suitable for mass production.

In addition to the foregoing, it should be appreciated that reference throughout this specification to "one embodiment," "another embodiment," "an embodiment," or the like, means that a particular feature, structure, or characteristic described in connection with the embodiment is included in at least one embodiment described generally in this application. The appearances of the same recitations in various places in the specification are not necessarily referring to the same embodiment.

In the embodiments of the invention, the descriptions of the respective embodiments have respective emphasis, and for parts that are not described in detail in a certain embodiment, reference may be made to the related descriptions of other embodiments.

## Claims

1. A lithium ion battery, comprising:
a cover plate assembly (1), comprising a pole (10) and a polarity connecting piece (19), and the pole (10) is connected with the polarity connecting piece (19);
a battery cell assembly (2), provided with at least one battery cell tab assembly (200), and the pole (10) is connected and conducted with the at least one battery cell tab assembly (200) through the polarity connecting piece (19).
a shell (3), and the battery cell assembly (2) and the polarity connecting piece (19) are disposed in the shell (3);
a supporting part, disposed in the shell (3) and configured to support the battery cell assembly (2), and the cover plate assembly (1) is disposed at the opening of the shell (3) and connected with the supporting part.
wherein the polarity connecting piece (19) comprises:
a polarity plate body, a first through hole (190) is formed in the polarity plate body, a first protrusion (192) and a first folded edge (193) are disposed on the side, facing the battery cell assembly (2), of the polarity plate body, a first groove (191) is formed in the edge of the first folded edge (193), the first protrusion (192) is connected with the supporting part, part of the pole (10) penetrates through the cover plate assembly (1) and extends into the shell (3) to be in interference fit with the polarity plate body through the first through hole (190), and the groove wall of the first groove (191) is connected with the battery cell tab assembly (200);
wherein the supporting part comprises:
two fixing frames (25), the two fixing frames are oppositely disposed and connected in a first direction;
two protection plates (21), the two protection plates (21) are oppositely arranged in a second direction, the two protection plates (21) are located on two sides of the two fixing frames (25) respectively, the two fixing frames (25) and the two protection plates (21) define an installation space, the battery cell assembly (2) is located in the installation space, the battery cell assembly (2) is provided with two battery cell tab assemblies (200), and the two battery cell tab assemblies (200) are disposed facing a side where the protection plates (21) are located;
wherein one of the two fixing frames (25) is provided with a locking column (251), the other fixing frame (25) of the two fixing frames (25) is provided with a connecting hole (252) matched with the locking column (251), and/or, a first end of each fixing frame (25) is provided with a locking column (251), and a second end of the each fixing frame (25) is provided with a connecting hole (252).

2. The lithium ion battery as claimed in claim 1, wherein the battery cell assembly (2) comprises a battery cell (24), the battery cell tab assembly (200) is disposed on the surface of the battery cell (24), and the battery cell tab assembly (200) comprises:
two polarity lugs (201), wherein the two polarity lugs (201) are oppositely disposed to form a limiting space;
a connecting plate (23), part of the connecting plate (23) is located in the limiting space, and an end of the connecting plate (23) extends into the first groove (191) and is connected with the side wall of the first groove (191);
a base plate (22), wherein the base plate (22) is connected with outer surfaces of the two polarity lugs (201).

3. The lithium ion battery of any of claims 1-2, wherein there are two battery cell tab assemblies (200) and two poles (10), the number of the polarity connecting pieces (19) is two, the two battery cell tab assemblies (200) and the two polarity connecting pieces (19) are disposed in a one-to-one correspondence mode, the two polarity connecting pieces (19) and the two poles (10) are disposed in a one-to-one correspondence mode, wherein one of the two battery cell tab assemblies (200) is positive, and the other one is negative.

4. The lithium ion battery as claimed in claim 1, wherein the cover plate assembly (1) comprises:
a cover plate (17), at least one second through hole (170) is formed in the cover plate (17), the poles (10) are located on one side of the outer surface of the cover plate (17), and part of the pole (10) penetrates through the second through hole (170) to be connected with the polarity connecting piece (19); and
an insulating support (18), the insulating support (18) is connected with the cover plate (17) and provided with third through holes (182) corresponding to the second through holes (170) one by one, and an end part of the insulating support (18) is clamped with the supporting part; and/or
wherein the cover plate (17) and the insulating support (18) are provided with fourth through holes (180), each fourth through hole (180) is provided with an explosion-proof valve (14) and a protective sticker (13), and the protective sticker (13) is disposed on a side where an outer surface of the explosion-proof valve (14) is located; and/or
wherein the cover plate (17) and the insulating support (18) are provided with fifth through holes (183), each fifth through hole (183) is provided with a sealing plug (16) and a sealing sticker (15), and the sealing sticker (15) is disposed on a side where an outer surface of the sealing plug (16) is located.

5. The lithium ion battery as claimed in claim 4, wherein the cover plate assembly (1) further comprises:
a protective sleeve (11), the protective sleeve (11) is disposed on the pole (10) in a sleeving mode, the protective sleeve (11) is located on a side where an outer surface of the cover plate (17) is located, and a sealing ring (12) is disposed between the protective sleeve (11) and the cover plate (17).

6. The lithium ion battery as claimed in claim 1, wherein each fixing frame (25) comprises:
a plate body structure (256), a first U-shaped plate (257) is disposed on a side, facing the protection plate (21), of a first end of the plate body structure (256), a second U-shaped plate (258) is disposed on a side, facing the protection plate ( 21), of a second end of the plate body structure (256), an opening side of the first U-shaped plate (257) and an opening side of the second U-shaped plate (258) are oppositely disposed, and at least one second protrusion (259) is disposed on the outer surface of at least one of the first U-shaped plate (257) and the second U-shaped plate (258) and abuts against a connecting plate (23) of the battery cell tab assembly (200);
wherein at least one first limiting groove (254) is formed in an end part of the first end of the plate body structure (256), and a first protrusion (192) of the polarity connecting piece (19) extends into the first limiting groove (254).

7. The lithium ion battery as claimed in claim 6, wherein at least one of the first U-shaped plate (257) and the second U-shaped plate (258) is of a hollow structure.

8. The lithium ion battery as claimed in claim 6, wherein second limiting grooves (2581) are formed in outer surfaces of two oppositely disposed side plates of the second U-shaped plate (258), and part of the protection plates (21) extend into the second limiting grooves (2581).

9. The lithium ion battery as claimed in claim 8, wherein each protection plate (21) comprises:
a protection plate body (210), an inner surface of a first end of the protection plate body (210) is of an arc-shaped chamfer structure, a second folded edge (214) is disposed at a second end of the protection plate body (210), a length direction of the second folded edge (214) is disposed in a width direction of the protection plate body (210), a third protrusion (215) is disposed on a surface of a side, facing the fixing frame (25), of the second folded edge (214), and the third protrusion (215) and a corresponding second limiting groove (2581) in the second limiting grooves (2581) are disposed in a matched mode.

10. The lithium ion battery as claimed in claim 1, wherein the protection plate (21) is of a hollow structure, a first limiting column (211) and a second limiting column (212) are disposed on a surface of a side, facing the fixing frame (25), of the protection plate (21), the first limiting column (211) and the second limiting column (212) are oppositely disposed, and the first limiting column (211) and the second limiting column (212) abut against the fixing frame (25).

11. The lithium ion battery as claimed in claim 5, wherein at least one of the sealing ring (12) and the insulating support (18) is made of PFA material.

12. An electric car, comprising the lithium ion battery, wherein the lithium ion battery comprises: is the lithium ion battery of any of claims 1-11.

## Patentansprüche

1. Lithium-Ionen-Batterie, umfassend:
eine Abdeckplattenanordnung (1), die einen Pol (10) und ein Polaritätsanschlussstück (19) umfasst, wobei der Pol (10) mit dem Polaritätsanschlussstück (19) verbunden ist;
eine Batteriezellenanordnung (2), die mit mindestens einer Batteriezellenlaschenanordnung (200) versehen ist, wobei der Pol (10) durch das Polaritätsanschlussstück (19) mit der mindestens einen Batteriezellenlaschenanordnung (200) verbunden und geführt ist,
eine Schale (3), wobei die Batteriezellenanordnung (2) und das Polaritätsanschlussstück (19) in der Schale (3) angeordnet sind;
ein Trägerteil, das in der Schale (3) angeordnet ist und dazu konfiguriert ist, die Batteriezellenanordnung (2) zu stützen, wobei die Abdeckplattenanordnung (1) an der Öffnung der Schale (3) angeordnet und mit dem Trägerteil verbunden ist,
wobei das Polaritätsanschlussstück (19) Folgendes umfasst:
einen Polaritätsplattenkörper, wobei in dem Polaritätsplattenkörper ein erstes Durchgangsloch (190) ausgebildet ist, wobei ein erster Vorsprung (192) und eine erste gefaltete Kante (193) auf der der Batteriezellenanordnung (2) zugewandten Seite des Polaritätsplattenkörpers angeordnet sind, wobei eine erste Nut (191) in der Kante der ersten gefalteten Kante (193) gebildet ist, wobei der erste Vorsprung (192) mit dem Trägerteil verbunden ist, wobei ein Teil des Pols (10) durch die Abdeckplattenanordnung (1) hindurchdringt und sich in die Schale (3) erstreckt, um durch das erste Durchgangsloch (190) in Presspassung mit dem Polaritätsplattenkörper zu stehen, und wobei die Nutwand der ersten Nut (191) mit der Batteriezellenlaschenanordnung (200) verbunden ist;
wobei das Trägerteil Folgendes umfasst:
zwei Befestigungsrahmen (25), wobei die beiden Befestigungsrahmen gegenüberliegend angeordnet und in einer ersten Richtung verbunden sind;
zwei Schutzplatten (21), wobei die beiden Schutzplatten (21) in einer zweiten Richtung gegenüberliegend angeordnet sind, wobei die beiden Schutzplatten (21) sich jeweils auf zwei Seiten der beiden Befestigungsrahmen (25) befinden, wobei die beiden Befestigungsrahmen (25) und die beiden Schutzplatten (21) einen Einbauraum definieren, wobei sich die Batteriezellenanordnung (2) in dem Einbauraum befindet, wobei die Batteriezellenanordnung (2) mit zwei Batteriezellenlaschenanordnungen (200) versehen ist und die beiden Batteriezellenlaschenanordnungen (200) einer Seite zugewandt angeordnet sind, auf der sich die Schutzplatten (21) befinden;
wobei einer der beiden Befestigungsrahmen (25) mit einer Verriegelungssäule (251) versehen ist, wobei der andere Befestigungsrahmen (25) der beiden Befestigungsrahmen (25) mit einem Verbindungsloch (252) versehen ist, das mit der Verriegelungssäule (251) übereinstimmt, und/oder wobei ein erstes Ende jedes Befestigungsrahmens (25) mit einer Verriegelungssäule (251) versehen ist und ein zweites Ende jedes Befestigungsrahmens (25) mit einem Verbindungsloch (252) versehen ist.

2. Lithium-Ionen-Batterie nach Anspruch 1, wobei die Batteriezellenanordnung (2) eine Batteriezelle (24) umfasst, die Batteriezellenlaschenanordnung (200) auf der Oberfläche der Batteriezelle (24) angeordnet ist und die Batteriezellenlaschenanordnung (200) Folgendes umfasst:
zwei Polungsfahnen (201), wobei die beiden Polungsfahnen (201) gegenüberliegend angeordnet sind, um einen Begrenzungsraum zu bilden;
eine Verbindungsplatte (23), wobei sich ein Teil der Verbindungsplatte (23) im Begrenzungsraum befindet und ein Ende der Verbindungsplatte (23) in die erste Nut (191) hineinragt und mit der Seitenwand der ersten Nut (191) verbunden ist;
eine Grundplatte (22), wobei die Grundplatte (22) mit Außenflächen der beiden Polungsfahnen (201) verbunden ist.

3. Lithium-Ionen-Batterie nach einem der Ansprüche 1 bis 2, wobei zwei Batteriezellenlaschenanordnungen (200) und zwei Pole (10) vorhanden sind, wobei die Anzahl der Polaritätsanschlussstücke (19) zwei ist, die beiden Batteriezellenlaschenanordnungen (200) und die beiden Polaritätsanschlussstücke (19) in einer Eins-zu-eins-Entsprechung angeordnet sind, wobei die beiden Polaritätsanschlussstücke (19) und die beiden Pole (10) in einer Eins-zu-eins-Entsprechung angeordnet sind, wobei eine der beiden Batteriezellenlaschenanordnungen (200) positiv und die andere negativ ist.

4. Lithium-Ionen-Batterie nach Anspruch 1, wobei die Abdeckplattenanordnung (1) Folgendes umfasst:
eine Abdeckplatte (17), wobei in der Abdeckplatte (17) mindestens ein zweites Durchgangsloch (170) ausgebildet ist, die Pole (10) sich auf einer Seite der Außenfläche der Abdeckplatte (17) befinden und ein Teil der Pole (10) durch das zweite Durchgangsloch (170) hindurchragt, um mit dem Polaritätsanschlussstück (19) verbunden zu werden; und
einen isolierenden Träger (18), wobei der isolierende Träger (18) mit der Abdeckplatte (17) verbunden ist und mit dritten Durchgangslöchern (182) versehen ist, die den zweiten Durchgangslöchern (170) nacheinander entsprechen, und ein Endteil der isolierenden Halterung (18) mit dem Trägerteil verklemmt ist; und/oder
wobei die Abdeckplatte (17) und der (18) mit vierten Durchgangslöchern (180) versehen sind, jedes vierte Durchgangsloch (180) mit einem explosionssicheren Ventil (14) und einem Schutzaufkleber (13) versehen ist und der Schutzaufkleber (13) auf einer Seite angeordnet ist, auf der sich eine Außenfläche des explosionssicheren Ventils (14) befindet; und/oder
wobei die Abdeckplatte (17) und der isolierende Träger (18) mit fünften Durchgangslöchern (183) versehen sind, jedes fünfte Durchgangsloch (183) mit einem Verschlussstopfen (16) und einem Verschlussaufkleber (15) versehen ist und der Verschlussaufkleber (15) auf einer Seite angeordnet ist, auf der sich eine Außenfläche des Verschlussstopfens (16) befindet.

5. Lithium-Ionen-Batterie nach Anspruch 4, wobei die Abdeckplattenanordnung (1) ferner Folgendes umfasst:
eine Schutzhülse (11), wobei die Schutzhülse (11) in einer Hüllform auf dem Pol (10) angeordnet ist, die Schutzhülse (11) sich auf einer Seite befindet, auf der sich eine Außenfläche der Abdeckplatte (17) befindet, und ein Dichtungsring (12) zwischen der Schutzhülse (11) und der Abdeckplatte (17) angeordnet ist.

6. Lithium-Ionen-Batterie nach Anspruch 1, wobei jeder Befestigungsrahmen (25) Folgendes umfasst:
eine Plattenkörperstruktur (256), wobei eine erste U-förmige Platte (257) auf einer der Schutzplatte (21) zugewandten Seite eines ersten Endes der Plattenkörperstruktur (256) angeordnet ist, eine zweite U-förmige Platte (258) auf einer der Schutzplatte (21) zugewandten Seite eines zweiten Endes der Plattenkörperstruktur (256) angeordnet ist, eine Öffnungsseite der ersten U-förmigen Platte (257) und eine Öffnungsseite der zweiten U-förmigen Platte (258) gegenüberliegend angeordnet sind, und mindestens ein zweiter Vorsprung (259) auf der Außenfläche mindestens einer der ersten U-förmigen Platte (257) und der zweiten U-förmigen Platte (258) angeordnet ist und an einer Verbindungsplatte (23) der Batteriezellenlaschenanordnung (200) anliegt;
wobei mindestens eine erste Begrenzungsnut (254) in einem Endteil des ersten Endes der Plattenkörperstruktur (256) ausgebildet ist und ein erster Vorsprung (192) des Polaritätsanschlussstücks (19) in die erste Begrenzungsnut (254) hineinragt.

7. Lithium-Ionen-Batterie nach Anspruch 6, wobei mindestens eine der ersten U-förmigen Platte (257) und der zweiten U-förmigen Platte (258) eine hohle Struktur aufweist.

8. Die Lithium-Ionen-Batterie nach Anspruch 6, wobei zweite Begrenzungsnuten (2581) in Außenflächen von zwei gegenüberliegenden Seitenplatten der zweiten U-förmigen Platte (258) gebildet sind und ein Teil der Schutzplatten (21) in die zweiten Begrenzungsnuten (2581) hineinragt.

9. Lithium-Ionen-Batterie nach Anspruch 8, wobei jede Schutzplatte (21) Folgendes umfasst:
einen Schutzplattenkörper (210), wobei eine Innenfläche eines ersten Endes des Schutzplattenkörpers (210) eine bogenförmige Abschrägungsstruktur aufweist, eine zweite Falzkante (214) an einem zweiten Ende des Schutzplattenkörpers (210) angeordnet ist, eine Längsrichtung der zweiten Falzkante (214) in Breitenrichtung des Schutzplattenkörpers (210) verläuft, ein dritter Vorsprung (215) auf einer Oberfläche einer dem Befestigungsrahmen (25) zugewandten Seite der zweiten Falzkante (214) angeordnet ist und der dritte Vorsprung (215) und eine entsprechende zweite Begrenzungsnut (2581) in den zweiten Begrenzungsnuten (2581) passend angeordnet sind.

10. Lithium-Ionen-Batterie nach Anspruch 1, wobei die Schutzplatte (21) eine hohle Struktur aufweist, eine erste Begrenzungssäule (211) und eine zweite Begrenzungssäule (212) auf einer Oberfläche einer dem Befestigungsrahmen (25) zugewandten Seite der Schutzplatte (21) angeordnet sind, die erste Begrenzungssäule (211) und die zweite Begrenzungssäule (212) gegenüberliegend angeordnet sind und die erste Begrenzungssäule (211) und die zweite Begrenzungssäule (212) an dem Befestigungsrahmen (25) anliegen.

11. Lithium-Ionen-Batterie nach Anspruch 5, wobei der Dichtring (12) und/oder der isolierende Träger (18) aus PFA-Material bestehen.

12. Elektroauto, umfassend die Lithium-Ionen-Batterie, wobei die Lithium-Ionen-Batterie Folgendes umfasst: die Lithium-Ionen-Batterie nach einem der Ansprüche 1 bis 11 ist.

## Revendications

1. Batterie lithium-ion, comprenant :
un ensemble de plaque de recouvrement (1), comprenant un pôle (10) et une pièce de connexion de polarité (19), et le pôle (10) est connecté à la pièce de connexion de polarité (19) ;
un ensemble de cellules de batterie (2), pourvu d'au moins un ensemble de languettes de cellules de batterie (200), et le pôle (10) est connecté et conduit avec l'au moins un ensemble de languettes de cellules de batterie (200) à travers la pièce de connexion de polarité (19),
une coque (3), et l'ensemble de cellules de batterie (2) et la pièce de connexion de polarité (19) sont disposés dans la coque (3) ;
une partie de support, disposée dans la coque (3) et configurée pour supporter l'ensemble de cellules de batterie (2), et l'ensemble de plaque de recouvrement (1) est disposé à l'ouverture de la coque (3) et connecté à la partie de support,
dans laquelle la pièce de connexion de polarité (19) comprend :
un corps de plaque de polarité, un premier trou traversant (190) est formé dans le corps de plaque de polarité, une première saillie (192) et un premier bord plié (193) sont disposés sur le côté, faisant face à l'ensemble de cellules de batterie (2), du corps de plaque de polarité, une première rainure (191) est formée dans le bord du premier bord plié (193), la première saillie (192) est connectée à la partie de support, une partie du pôle (10) pénètre à travers l'ensemble de plaque de recouvrement (1) et s'étend dans la coque (3) pour être en ajustement serré avec le corps de plaque de polarité à travers le premier trou traversant (190), et la paroi de rainure de la première rainure (191) est connectée à l'ensemble de languettes de cellule de batterie (200) ;
dans laquelle la partie de support comprend :
deux cadres de fixation (25), les deux cadres de fixation sont disposés de manière opposée et connectés dans une première direction ;
deux plaques de protection (21), les deux plaques de protection (21) sont disposées de manière opposée dans une seconde direction, les deux plaques de protection (21) sont situées sur deux côtés des deux cadres de fixation (25) respectivement, les deux cadres de fixation (25) et les deux plaques de protection (21) définissent un espace d'installation, l'ensemble de cellules de batterie (2) est situé dans l'espace d'installation, l'ensemble de cellules de batterie (2) est pourvu de deux ensembles de languettes de cellules de batterie (200), et les deux ensembles de languettes de cellules de batterie (200) sont disposés face à un côté où se trouvent les plaques de protection (21) ;
dans laquelle l'un des deux cadres de fixation (25) est pourvu d'une colonne de verrouillage (251), l'autre cadre de fixation (25) des deux cadres de fixation (25) est pourvu d'un trou de connexion (252) correspondant à la colonne de verrouillage (251), et/ou une première extrémité de chaque cadre de fixation (25) est pourvue d'une colonne de verrouillage (251), et une seconde extrémité de chaque cadre de fixation (25) est pourvue d'un trou de connexion (252).

2. Batterie lithium-ion selon la revendication 1, dans laquelle l'ensemble de cellules de batterie (2) comprend une cellule de batterie (24), l'ensemble de languettes de cellules de batterie (200) est disposé sur la surface de la cellule de batterie (24), et l'ensemble de languettes de cellules de batterie (200) comprend :
deux cosses de polarité (201), dans laquelle les deux cosses de polarité (201) sont disposées de manière opposée pour former un espace de limitation ;
une plaque de connexion (23), une partie de la plaque de connexion (23) est située dans l'espace de limitation, et une extrémité de la plaque de connexion (23) s'étend dans la première rainure (191) et est connectée à la paroi latérale de la première rainure (191) ;
une plaque de base (22), dans laquelle la plaque de base (22) est connectée à des surfaces extérieures des deux cosses de polarité (201).

3. Batterie lithium-ion selon l'une quelconque des revendications 1 et 2, dans laquelle il y a deux ensembles de languettes de cellules de batterie (200) et deux pôles (10), le nombre de pièces de connexion de polarité (19) est de deux, les deux ensembles de languettes de cellules de batterie (200) et les deux pièces de connexion de polarité (19) sont disposés dans un mode de correspondance biunivoque, les deux pièces de connexion de polarité (19) et les deux pôles (10) sont disposés dans un mode de correspondance biunivoque, dans laquelle l'un des deux ensembles de languettes de cellules de batterie (200) est positif, et l'autre est négatif.

4. Batterie lithium-ion selon la revendication 1, dans laquelle l'ensemble de plaque de recouvrement (1) comprend :
une plaque de recouvrement (17), au moins un deuxième trou traversant (170) est formé dans la plaque de recouvrement (17), les pôles (10) sont situés sur un côté de la surface extérieure de la plaque de recouvrement (17), et une partie du pôle (10) pénètre à travers le deuxième trou traversant (170) pour être connectée à la pièce de connexion de polarité (19) ; et
un support isolant (18), le support isolant (18) est connecté à la plaque de recouvrement (17) et pourvu de troisièmes trous traversants (182) correspondant aux deuxièmes trous traversants (170) un par un, et une partie d'extrémité du support isolant (18) est serrée avec la partie de support ; et/ou
dans laquelle la plaque de recouvrement (17) et le support isolant (18) sont pourvus de quatrièmes trous traversants (180), chaque quatrième trou traversant (180) étant pourvu d'une soupape antidéflagrante (14) et d'un autocollant de protection (13), et l'autocollant de protection (13) est disposé sur un côté où se trouve une surface extérieure de la soupape antidéflagrante (14) ; et/ou
dans laquelle la plaque de recouvrement (17) et le support isolant (18) sont pourvus de cinquièmes trous traversants (183), chaque cinquième trou traversant (183) est pourvu d'un bouchon d'étanchéité (16) et d'un autocollant d'étanchéité (15), et l'autocollant d'étanchéité (15) est disposé sur un côté où se trouve une surface extérieure du bouchon d'étanchéité (16).

5. Batterie lithium-ion selon la revendication 4, dans laquelle l'ensemble de plaque de recouvrement (1) comprend en outre :
un manchon de protection (11), le manchon de protection (11) est disposé sur le pôle (10) dans un mode de manchonnage, le manchon de protection (11) est situé sur un côté où se trouve une surface extérieure de la plaque de recouvrement (17), et une bague d'étanchéité (12) est disposée entre le manchon de protection (11) et la plaque de recouvrement (17).

6. Batterie lithium-ion selon la revendication 1, dans laquelle chaque cadre de fixation (25) comprend :
une structure de corps de plaque (256), une première plaque en forme de U (257) est disposée sur un côté, face à la plaque de protection (21), d'une première extrémité de la structure de corps de plaque (256), une seconde plaque en forme de U (258) est disposée sur un côté, face à la plaque de protection (21), d'une seconde extrémité de la structure de corps de plaque (256), un côté d'ouverture de la première plaque en forme de U (257) et un côté d'ouverture de la seconde plaque en forme de U (258) sont disposés de manière opposée, et au moins une deuxième saillie (259) est disposée sur la surface extérieure d'au moins l'une de la première plaque en forme de U (257) et de la seconde plaque en forme de U (258) et vient en butée contre une plaque de connexion (23) de l'ensemble de languettes de cellules de batterie (200) ;
dans laquelle au moins une première rainure de limitation (254) est formée dans une partie d'extrémité de la première extrémité de la structure de corps de plaque (256), et une première saillie (192) de la pièce de connexion de polarité (19) s'étend dans la première rainure de limitation (254).

7. Batterie lithium-ion selon la revendication 6, dans laquelle au moins l'une de la première plaque en forme de U (257) et de la seconde plaque en forme de U (258) présente une structure creuse.

8. Batterie lithium-ion selon la revendication 6, dans laquelle des secondes rainures de limitation (2581) sont formées dans des surfaces extérieures de deux plaques latérales disposées de manière opposée de la seconde plaque en forme de U (258), et une partie des plaques de protection (21) s'étend dans les secondes rainures de limitation (2581).

9. Batterie lithium-ion selon la revendication 8, dans laquelle chaque plaque de protection (21) comprend :
un corps de plaque de protection (210), une surface intérieure d'une première extrémité du corps de plaque de protection (210) présente une structure de chanfrein en forme d'arc, un second bord plié (214) est disposé à une seconde extrémité du corps de plaque de protection (210), une direction de la longueur du second bord plié (214) est disposée dans une direction de la largeur du corps de plaque de protection (210), une troisième saillie (215) est disposée sur une surface d'un côté, faisant face au cadre de fixation (25), du second bord plié (214), et la troisième saillie (215) et une seconde rainure de limitation (2581) correspondante dans les secondes rainures de limitation (2581) sont disposées dans un mode apparié.

10. Batterie lithium-ion selon la revendication 1, dans laquelle la plaque de protection (21) présente une structure creuse, une première colonne de limitation (211) et une seconde colonne de limitation (212) sont disposées sur une surface d'un côté, faisant face au cadre de fixation (25), de la plaque de protection (21), la première colonne de limitation (211) et la seconde colonne de limitation (212) sont disposées de manière opposée, et la première colonne de limitation (211) et la seconde colonne de limitation (212) viennent en butée contre le cadre de fixation (25).

11. Batterie lithium-ion selon la revendication 5, dans laquelle au moins l'un de la bague d'étanchéité (12) et du support isolant (18) est constitué de matériau PFA.

12. Voiture électrique, comprenant la batterie lithium-ion, dans laquelle la batterie lithium-ion comprend : est la batterie lithium-ion selon l'une quelconque des revendications 1 à 11.
